# EUROPEAN PATENT SPECIFICATION

(11) **EP 0 961 042 B1**
(45) Date of publication and mention of the grant of the patent: **12.11.2003**
(21) Application number: 99201130.4
(22) Date of filing: 12.04.1999
(51) Int. Cl.: F16B 23/00

(54) **Head for devices rotating upon operation of associated operating tools with internal seat for engagement with the tools themselves**
Durch Bedienung von zugehörigen Werkzeugen drehender Kopf für Vorrichtungen, mit innerer Ausnehmung zum Eingriff mit diesen Werkzeugen
Tête pour dispositifs tournante avec des outils associés et évidement intérieur pour engagement avec ces outils

(30) Priority: 29.05.1998 IT MI981204
(43) Date of publication of application: 01.12.1999
(73) Proprietor: F.lli Mauri S.r.l., 23852 Garlate (Lecco) (IT)
(72) Inventor: Mauri, Gaetano, 23900 Lecco (IT)
(74) Representative: Raimondi, Alfredo, Dott. Ing. Prof.

(56) References cited:
- DE-U- 8 329 784
- DE-U- 8 610 715
- FR-A- 2 361 568
- FR-A- 2 383 350
- US-A- 2 556 155
- US-A- 5 358 368

## Description

The present invention relates to a head for devices such as screws and the like which can be rotated by means of associated operating tools, comprising at least a first coaxial internal seat which is substantially cylindrical and provided with radial flarings for engagement with said operating tool.

In the technical sector relating to the production of components such as screws, inserts, bushes and the like, rotating upon actuation by associated tools, it is known that there is the need for the heads of the said components to be provided with recessed seats for engagement with the operating tool.

Said tools and seats may have different shapes, the most commonly used including cross-type or hexagonal shapes since they have good mutual-engagement characteristics for generation of the screwing/ unscrewing torque.

It is also known that, when manufacturing the heads of screws, it is necessary to decide whether to produce either a so-called cross-head or a so-called internal hexagonal head in accordance with the specific request of the client. This results in the need for duplication of equipment in the case of the manufacturer and duplication of the tools in the warehouse in the case of the distributor, since both of them must in any case be equipped and re-furnished with two types of screw.

The cross-type heads also include two particular known designs thereof - referred to in the trade by the name "posidriv" and Philips" - which have a special configuration of the cross-seat, namely: asymmetrical with a conical flank and symmetrical with two conical flanks.

In both cases the inclination of the conical flank is chosen so as to provide the assembly with specific geometrical characteristics.

FR-2,361,568 describes a screw with a head having a cross-shaped seat coaxial with a more internal polygonal seat.

The radial flarings of the cross-shaped seat, however, have conical flanks, thus meaning that the screw can be operated only by the associated tool which, in order to provide a high torque, must also have a size corresponding to that of the seat, since a tool with even a slightly smaller size would slip during rotation along the inclined flanks of the radial flarings, not transmitting torque.

In addition to this, the known screw is also not unaffected by rotation in the opposite direction since, in this case also, the conicity of the radial seats does not allow torque to be transmitted to the head for unscrewing.

Although functional, these screws known in the art therefore have the drawback that they be may engaged (and hence operated) only with a specific and special operating tool corresponding to the geometrical characteristics of the associated head.

In this case, also, the limitation of these screws is obvious, since the user is obliged to equip himself with a whole series of special tools for each type of screw. A further example of the prior art is disclosed into DE-G-8 329 784.

The technical problem which is posed, therefore, is that of providing a head for components rotating upon operation of an associated tool, provided with a seat for engagement with the operating tool, which is of the universal cross-type, i.e. may be operated by any cross-headed tool including those which are not of a particular type and which may also be operated with a high torque value in both directions of rotation equally well and even if operated by means of a tool with a size slightly smaller than the nominal size of the screw operating seat.

Within the scope of this problem a further requirement is that the seat for engagement with the tool should have a double shape of the universal cross-type, as described above, and internal polygon type so as to allow operation of the screw both with any cross-headed tool and with a corresponding polygonal spanner.

These technical problems are solved according to the present invention by a head for devices such as screws and the like according to the characteristic of claim 1.

Further details may be obtained from the following description of an example of embodiment of the invention provided with reference to the accompanying drawings, in which:

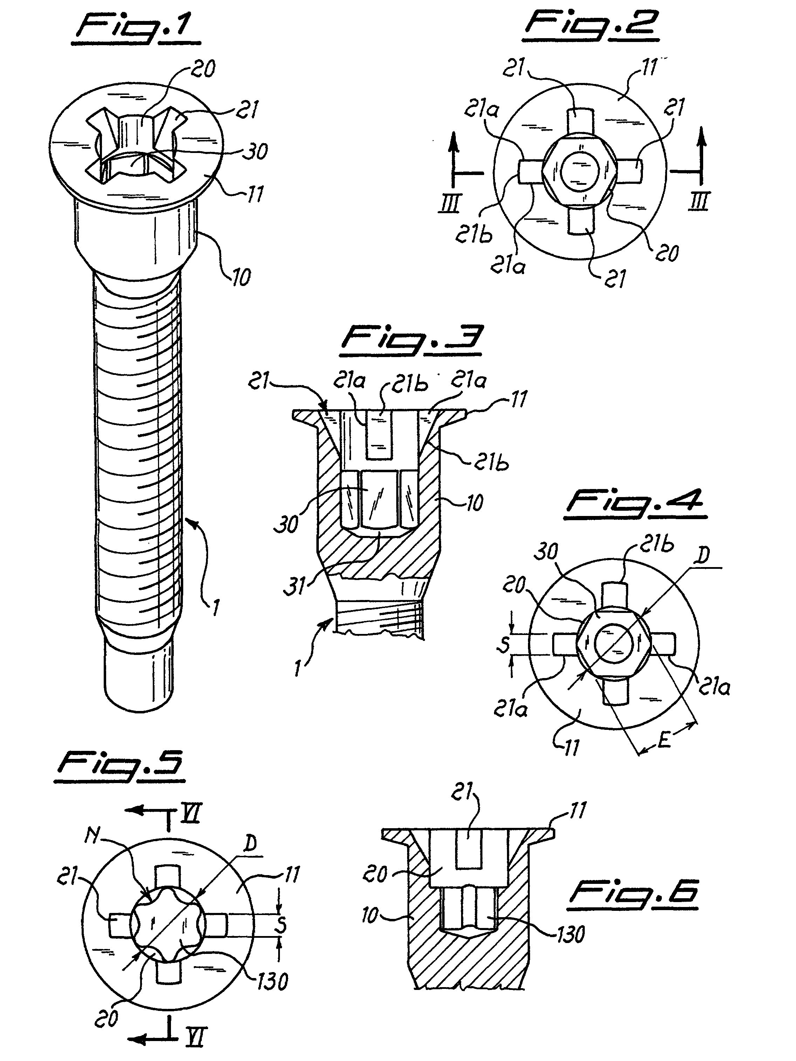

Figure 1 shows a schematic perspective view of the screw with head according to the present invention;
Figure 2 shows a top plan view of the head according to Fig. 1;
Figure 3 shows a cross-sectional view of the screw along the plane indicated by the line III-III in Fig. 2;
Figure 4 is a plan view, similar to that of Fig. 2, showing the geometrical parameters which are characteristic of the flarings for engagement with the operating tools;
Figure 5 shows a top plan view of a variation of an example of embodiment of the seat for engagement with the tool; and
Figure 6 shows a cross-section along the plane indicated by VI-VI in Fig. 5.

As shown, the screw 1 according to the invention has a head 10 provided internally with two seats which are respectively of the cross-type 20 and internal hexagonal type 30 and which are coaxial with one another and respectively arranged in succession to one another, the hexagonal seat 30 being successive with respect to the other, cross-type, seat 20 in the axial direction and relative to the abutting edge 11 of the screw head.

The seat 20 has a substantially cylindrical shape and has, extending from its side surface, along two diameters which are perpendicular to one another, respective conical flarings 21 which are designed to allow the insertion, centring and engagement, for generation of the screwing/unscrewing torque, of a male cross-headed tool of the known type and hence not illustrated.

More particularly, said conical flarings 21 are delimited by flanks 21a which are parallel to one another and to the longitudinal axis of the screw 1 and by a curvilinear end surface 21b which is preferably circumferential and inclined at a suitable angle so as to provide the said conicity with respect to the longitudinal axis of the screw.

In this way adaptability of the head to any type of cross-headed operating tool is obtained.

As illustrated, in Fig. 3, the internal hexagonal seat 30 axially underlying the cross-type seat 20 has dimensions such that, over any cross-section along the longitudinal axis of the head, the hexagon is always inscribed within the corresponding circumference of the external surface of the cylinder of the seat 20.

This is illustrated in Fig. 4 in which it can be seen that the diameter "D" of the external circumference of the seat 20 is always greater than the side-to-side distance "E" of the perimetral hexagon of the seat 30.

It is envisaged that the inscribed polygon may also have any polygonal shape, provided that it is within said circumference.

The bottom of the seat 30 also has formed in it an undercut 31 which allows the cross-headed operating tool to descend axially towards the inside of the screw in the event of wear of the flanks 21a or the end wall 21b of the flarings 21: this allows the tool to centre itself and consequently ensure correct engagement with the head 10 even in the case of the abovementioned wear of the said flarings 21 - wear which would otherwise tend to leave play between seat and tool, not allowing adequate mutual engagement.

The head of the screw with a double seat of the universal cross-type and internal hexagonal type according to the invention allows all the problems mentioned in the preamble to be overcome, with considerable advantages both for the manufacturer and for the distributor, who are able to limit respectively the production equipment and the warehouse stock to a single model of screw, as well as for the user who is able to operate the screw itself using any tool available without having to have a special tool for each commercially available screw.

Fig. 4, in addition to the parameters D and E, also show the parameter "S" corresponding to the width of the flaring 21.

In the specific case of a regular inscribed hexagon, as shown in the Figures, said parameters are related to one another by preferential values in accordance with the following table:

| | | | | |
|---|---|---|---|---|
| E | 2.5 | 3 | 4 | 5 |
| D | 2.9 | 3.55 | 4.65 | 5.75 |
| S | 0.8 | 1.2 | 1.5 | 1.8 |

It is also possible, although described in relation to a hexagonal perimeter, for the second seat to be made with any suitable regular polygonal shape or alternatively as illustrated in Figs. 4 and 5 with a so-called lobed shape 130 where each side of the inscribed polygon is replaced by a curvilinear section and each vertex is rounded in accordance with preferential values for the ratios between the diameter (D) of the circumference of the seat 20, the width (S) of the radial seats 21 and the size of the lobe conventionally expressed by a number (N), as shown in the table below:

| N | 10 | 15 | 25 | 30 |
|---|---|---|---|---|
| D | 2.9 | 3.55 | 4.65 | 5.75 |
| S | 0.8 | 1.2 | 1.5 | 1.8 |

## Claims

1. Head for devices such as screws and the like which can be rotated by means of associated operating tools, comprising at least a first coaxial internal seat (20) provided with radial flarings (21) extending radially from the side surface of the seat itself, said first seat (20) has a substantially cylindrical shape said flarings have a conical end surface (21b) and lateral flanks (21a) which are parallel to one another and to the longitudinal axis of the screw itself for engagement with said operating tool,
**characterized in that** it has a second internal seat (30) which is coaxial with the preceding first coaxial internal seat,
**in that** said second seat (30) is situated more internally with respect to the first seat (20) in the longitudinal direction and with reference to the abutting edge (11) of the head (10) itself, and
**in that** said second seat (30) has a polygonal shape.

2. Head according to Claim 1, **characterized in that** said radial flarings (21) are arranged along axial planes.

3. Head according to Claim 2, **characterized in that** said axial planes are perpendicular to one another.

4. Head according to Claim 1, **characterized in that** the bottom of said second seat (30) has an undercut (31).

5. Head according to Claim 1, **characterized in that** said polygonal section is situated within the circumference corresponding to the cross-section of the first cylindrical seat (20) of the head.

6. Head according to Claim 1, **characterized in that** said polygonal section is regular.

7. Head according to Claim 6, **characterized in that** said polygonal section is inscribed within the circumference corresponding to the cross-section of the first cylindrical seat (20) inside the head.

8. Head according to Claim 6, **characterized in that** said polygonal section is hexagonal.

9. Head according to Claim 1, **characterized in that** said second internal seat (30) coaxial with the preceding seat (20) has a lobed shape.

## Patentansprüche

1. Kopf für Vorrichtungen wie Schrauben und dergleichen, der mittels ihm zugeordneter Betätigungswerkzeuge gedreht werden kann, mit mindestens einem ersten koaxialen inneren Sitz (20) mit radialen konischen Erweiterungen (21), die radial von der Seitenfläche des Sitzes selbst wegragen, wobei der erste Sitz (20) im wesentlichen zylindrische Form hat und die Erweiterungen eine konische Endfläche (21b) und seitliche Flanken (21a) aufweisen, welche zueinander und zur Längsachse der Schraube selbst zum Zusammenwirken mit dem Betätigungswerkzeug parallel sind, **dadurch gekennzeichnet, daß** er einen zweiten inneren Sitz (30) hat, der koaxial mit dem erwähnten ersten koaxialen inneren Sitz ist, daß der zweite Sitz (30) bezüglich des ersten Sitzes (20) in Längsrichtung und bezüglich des anschlagenden Randes (11) des Kopfes (10) selbst weiter innen gelegen ist und daß der zweite Sitz (30) vieleckige Form hat.

2. Kopf nach Anspruch 1, **dadurch gekennzeichnet, daß** die radialen Erweiterungen (21) längs axialer Ebenen angeordnet sind.

3. Kopf nach Anspruch 2, **dadurch gekennzeichnet, daß** die axialen Ebenen senkrecht zueinander stehen.

4. Kopf nach Anspruch 1, **dadurch gekennzeichnet, daß** der Boden des zweiten Sitzes (30) einen Hinterschnitt (31) aufweist.

5. Kopf nach Anspruch 1, **dadurch gekennzeichnet, daß** der vieleckige Abschnitt innerhalb des Umfangs entsprechend dem Querschnitt des ersten zylindrischen Sitzes (20) des Kopfes gelegen ist.

6. Kopf nach Anspruch 1, **dadurch gekennzeichnet, daß** der vieleckige Abschnitt regelmäßig ist.

7. Kopf nach Anspruch 6, **dadurch gekennzeichnet, daß** der vieleckige Abschnitt von dem Umfang entsprechend dem Querschnitt des ersten zylindrischen Sitzes (20) innerhalb des Kopfes umschrieben ist.

8. Kopf nach Anspruch 6, **dadurch gekennzeichnet, daß** der vieleckige Querschnitt sechseckig ist.

9. Kopf nach Anspruch 4, **dadurch gekennzeichnet, daß** der zweite innere Sitz (30), der koaxial mit dem ersten Sitz (20) ist, eine gewellte Form hat.

## Revendications

1. Tête pour des dispositifs tels que des vis et similaires, qui peuvent être entraînés en rotation au moyen d'outils de service, comprenant au moins un premier siège intérieur coaxial (20) présentant des évasements (21) s'étendant radialement depuis la surface latérale du siège, ledit premier siège (20) ayant une forme essentiellement cylindrique, lesdits évasements ayant une surface terminale conique (21b) et des flancs latéraux (21a) qui sont parallèles entre eux et à l'axe longitudinal de la vis pour un engagement avec ledit outil de service,
***caractérisée en ce qu***'elle possède un second siège interne (30) qui est coaxial avec le premier siège interne coaxial précédent,
***en ce que*** ledit second siège (30) est situé plus intérieurement par rapport au premier siège (20) dans la direction longitudinale et par rapport au rebord (11) en about de la tête (10), et
***en ce que*** ledit second siège (30) possède une forme polygonale.

2. Tête selon la Revendication 1, ***caractérisée en ce que*** lesdits évasements radiaux (21) sont disposés sur des plans axiaux.

3. Tête selon la Revendication 2, ***caractérisée en ce que*** lesdits plans axiaux sont perpendiculaires les uns aux autres.

4. Tête selon la Revendication 1, ***caractérisée en ce que*** le fond dudit second siège (30) présente une gorge de dégagement (31).

5. Tête selon la Revendication 1, ***caractérisée en ce que*** ladite section polygonale est située dans la circonférence correspondant à la section transversale du premier siège cylindrique (20) de la tête.

6. Tête selon la Revendication 1, ***caractérisée en ce que*** ladite section polygonale est régulière.

7. Tête selon la Revendication 6, ***caractérisée en ce que*** ladite section polygonale est inscrite dans la circonférence correspondant à la section transversale du premier siège cylindrique (20) à l'intérieur de la tête.

8. Tête selon la Revendication 6, ***caractérisée en ce que*** ladite section polygonale est hexagonale.

9. Tête selon la Revendication 1, ***caractérisée en ce que*** ledit second siège intérieur (30) coaxial du siège précédent (20) possède une forme lobée.
